# EUROPEAN PATENT APPLICATION

(11) **EP 4 783 084 A1**
(43) Date of publication of application: **29.07.2026**
(21) Application number: 26153850.8
(22) Date of filing: 23.01.2026
(51) Int. Cl.: G06Q 10/0631, G06Q 10/1093, G06Q 10/109

(54) **CONTEXTUAL DYNAMIC TASK LIST**

(30) Priority: 27.01.2025 US 202563749785 P; 21.01.2026 US 202619454538
(71) Applicant: Apple Inc., Cupertino, CA 95014 (US)
(72) Inventor: GRUNDHOEFER, Anselm, Cupertino, CA 95014 (US); JAIN, Anshul K., Cupertino, CA 95014 (US); RANGAPRASAD, Arun Srivatsan, Cupertino, CA 95014 (US); OTTENS, Elizabeth A., Cupertino, CA 95014 (US); MUNG, Jay C., Cupertino, CA 95014 (US); RASTOGI, Manu, Cupertino, CA 95014 (US)
(74) Representative: Heckeler, Patrick

(57) **Abstract**

Various implementations disclosed herein include devices, systems, and methods for identifying a subset of tasks from a task list based on a context. For example, a process may include obtaining a task list associated with a user that includes a plurality of tasks, each task including a user-defined action. The process may further include identifying conditions associated with performance by the user of the plurality of tasks. The conditions may be identified based on an automated analysis of the user-defined actions. The process may further include determining a context while a user is in a physical environment during a period of time. The process may further include identifying a subset of the tasks from the task list based on the context satisfying one or more of the conditions. The process may further include providing a view of a notification associated with the identified subset of the tasks.

## Description

### TECHNICAL FIELD

The present disclosure generally relates to systems, methods, and electronic devices for identifying a subset of tasks from a task list based on determining a context of a user in a physical environment.

### BACKGROUND

Task lists (e.g., to-do lists) are used to enhance productivity and streamline time management. For example, a traditional task list may make it easier for a user to stay on top of priorities (e.g., at work). Existing task lists may be inefficient with adjusting to changes, such as adapting to context-based experiences associated with a user both inside and outside of a work environment.

### SUMMARY

Various implementations disclosed herein include devices, systems, and methods that focus on a contextual dynamic (CoDy) task list that dynamically re-prioritizes and/or surfaces tasks depending on the user's contextual environment (e.g., a scene understanding of a user's physical environment and/or an understanding of the user's activity within the physical environment). For example, a notification may be provided to the user within a view on a device, such as a mobile device or a head mounted device (HMD) when the device identifies a condition associated with a task based on a context of the current environment. Some implementations involve a CoDy engine that confers contextual intelligence for an artificial intelligence agent to pre-fetch information or notify the user only when relevant. For example, a user being notified to "pick up eggs" on their to-do list, but only when contextually relevant such as at the grocery store or driving towards the store and not notified when the user is working at the office or driving towards the office. Furthermore, the device can automatically check off "pick up eggs" from their to-do list when the device determines, based on context including real-time sensor information (e.g., image sensor data, inertial data, audio data, and the like), that the user has grabbed eggs off the shelf and placed it in the grocery cart.

In some implementations, a process may include obtaining a user defined task list, guiding a user to the list of tasks, and identifying and providing a subset of tasks based on the current context (e.g., more than just a location-based reminder). In some implementations, added variables for prioritizing a task list using contextual reasoning in a multimodal sense may include access to payment applications (e.g., know where money are resources are spent), location-based information, calendar/email access (e.g., reservations, scheduled events (kids games, etc.)), weather-based information (e.g., camping trip planning), semantic clustering (e.g., house chores such as changing a light bulb, fixing hose, and the like, could be accomplished back-to-back), or a combination thereof. Optionally, sensor data used to determine the current contextual awareness for the user, such as images of the environment and/or images of the user interacting with the environment for detecting user activity within the environment, may also include physiological signals (e.g., pupil and/or eye gaze data, heart rate data, and the like).

In general, one innovative aspect of the subject matter described in this specification can be embodied in methods, at a device having a processor, that include the actions of obtaining a task list associated with a user, wherein the task list comprises a plurality of tasks, each task including a user-defined action. The actions may further include identifying conditions associated with performance by the user of the plurality of tasks, where the conditions are identified based on an automated analysis of the user-defined actions. The actions may further include determining a context while a user is in a physical environment during a period of time. The actions may further include identifying at least one task from the task list based on the context satisfying one or more of the conditions. The actions may further include providing a view of a notification associated with the identified at least one task.

These and other embodiments may each optionally include one or more of the following features.

In some aspects, the task list comprises a plurality of subsets of tasks, each subset of tasks comprising a context-based hierarchy. In some aspects, the task list comprises a context-based hierarchy that is prioritized based on one or more prioritization variables. In some aspects, the one or more prioritization variables includes payment history data associated with the user, location information associated with the device in the physical environment during the period of time, scheduling information associated with the user during the period of time, weather information during the period of time or during a future period of time associated with completion of a particular task, and semantic information associated with completion of a particular task. In some aspects, each task comprises a user-defined prioritization level. In some aspects, a prioritization level of one or more tasks is modified based on the determined context while the user is in the physical environment during the period of time.

In some aspects, identifying conditions associated with performance by the user of the plurality of tasks comprises identifying one or more requirements associated with completing the task. In some aspects, identifying conditions associated with performance by the user of the plurality of tasks comprises identifying that a first condition associated with completing a first task is the same condition associated with completing a second task.

In some aspects, identifying the at least one task from the task list based on the context satisfying one or more of the conditions comprises identifying one or more tasks that satisfy a particular condition based on the physical environment and the period of time. In some aspects, the actions further include determining that a first task from the task list is completed, and updating the task list based on the completed task. In some aspects, a first task of the plurality of tasks includes a list of subtasks.

In some aspects, determining the context while the user is in the physical environment during the period of time is based on sensor data of the physical environment. In some aspects, determining the context while the user is in the physical environment during the period of time is based on accessing data from an application associated with the user. In some aspects, determining the context while the user is in the physical environment during the period of time is based on physiological sensor data of the user. In some aspects, a location of the view of the notification is based on the determined context while the user is in the physical environment during the period of time.

In some aspects, the view is provided in an extended reality (XR) environment. In some aspects, the device is a head-mounted device (HMD).

In accordance with some implementations, a device includes one or more processors, a non-transitory memory, and one or more programs; the one or more programs are stored in the non-transitory memory and configured to be executed by the one or more processors and the one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figures 1A-1B illustrate exemplary electronic devices operating in a physical environment in accordance with some implementations.
Figure 2 illustrates an exemplary view for a frame of an extended reality (XR) environment of the environment of Figures 1A or 1B and provided by a device of Figures 1A or 1B, in accordance with some implementations.
Figure 3 illustrates a system flow diagram of an example process for generating prioritized sublists of contextually related tasks by identifying conditions associated with performance by a user of the tasks, in accordance with some implementations.
Figure 4 illustrates a system flow diagram of an example process for performing instructions associated with a contextual dynamic instruction set, in accordance with some implementations.
Figure 5A illustrates an exemplary electronic device operating in a physical environment in accordance with some implementations.
Figure 5B illustrates an exemplary view for a frame of an extended reality (XR) environment of the environment of Figure 5A and provided by a device of Figure 5A that includes a virtual notification of an identified subtask to a user while performing a house chore, in accordance with some implementations.
Figure 6 illustrates an exemplary view for a frame of an XR environment for displaying a notification of an identified subtask to a user while driving, in accordance with some implementations.
Figure 7 illustrates a block diagram of an example process of generating notifications based on identifying a subset of tasks from a task list using determined contextual-based data, in accordance with some implementations.
Figure 8 illustrates a flowchart of a method for identifying a subset of tasks from a task list based on determining a context of a user in a physical environment, in accordance with some implementations.
Figure 9 illustrates a block diagram of an electronic device of in accordance with some implementations.
Figure 10 illustrates a block diagram of an exemplary head-mounted device in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example implementations described herein.

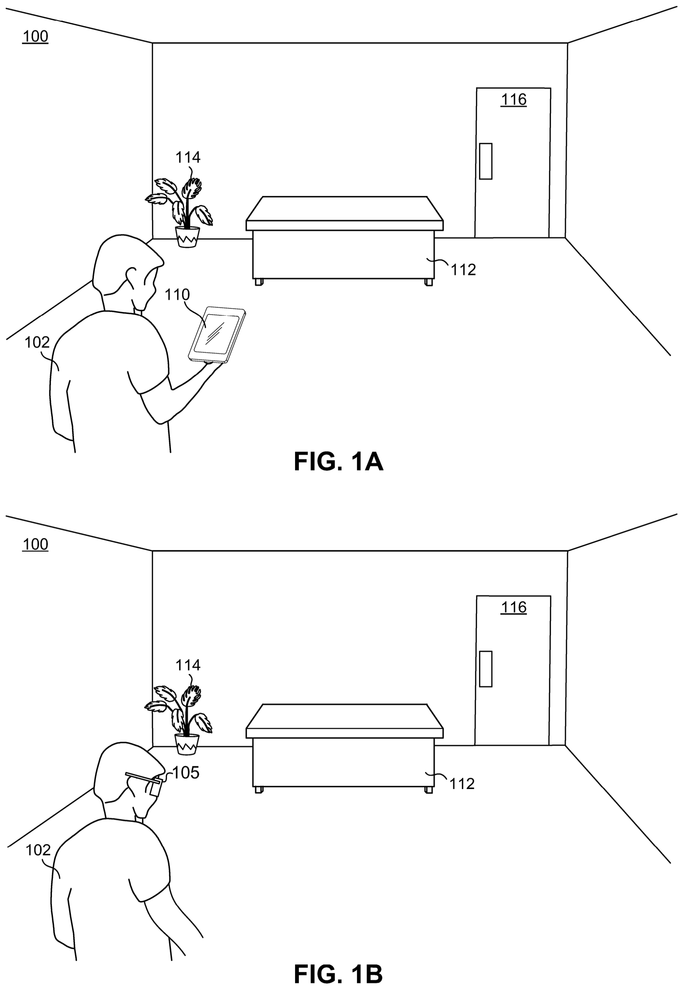

**Figures 1A-1B** illustrate exemplary electronic devices 105 and 110 operating in a physical environment 100. In the example of Figures 1A-1B, the physical environment 100 is a room that includes a desk 112, a plant 114, a door 116. The electronic devices 105 and 110 may include one or more cameras, microphones, depth sensors, or other sensors that can be used to capture information about and evaluate the physical environment 100 and the objects within it, as well as information about the user 102 of electronic devices 105 and 110. The information about the physical environment 100 and/or user 102 may be used to provide visual and audio content and/or to identify the current location of the physical environment 100 and/or the location of the user within the physical environment 100.

In some implementations, views of an extended reality (XR) environment may be provided to one or more participants (e.g., user 102 and/or other participants not shown) via electronic devices 105 (e.g., a wearable device such as an HMD) and/or 110 (e.g., a handheld device such as a mobile device, a tablet computing device, a laptop computer, etc.). Such an XR environment may include views of a 3D environment that is generated based on camera images and/or depth camera images of the physical environment 100 as well as a representation of user 102 based on camera images and/or depth camera images of the user 102. Such an XR environment may include virtual content that is positioned at 3D locations relative to a 3D coordinate system (e.g., a 3D space) associated with the XR environment, which may correspond to a 3D coordinate system of the physical environment 100.

In some implementations, video (e.g., pass-through video depicting a physical environment) is received from an image sensor of a device (e.g., device 105 or device 110) and used to present the XR environment. In other implementations, optical see-through may be used to present the XR environment by overlaying virtual content on a view of the physical environment seen through a translucent or transparent display. In some implementations, a 3D representation of a virtual environment is aligned with a 3D coordinate system of the physical environment. A sizing of the 3D representation of the virtual environment may be generated based on, *inter alia,* a scale of the physical environment or a positioning of an open space, floor, wall, etc. such that the 3D representation is configured to align with corresponding features of the physical environment. In some implementations, a viewpoint within the 3D coordinate system may be determined based on a position of the electronic device within the physical environment. The viewpoint may be determined based on, *inter alia,* image data, depth sensor data, motion sensor data, etc., which may be retrieved via a virtual inertial odometry system (VIO), a simultaneous localization and mapping (SLAM) system, etc.

People may sense or interact with a physical environment or world without using an electronic device. Physical features, such as a physical object or surface, may be included within a physical environment. For instance, a physical environment may correspond to a physical city having physical buildings, roads, and vehicles. People may directly sense or interact with a physical environment through various means, such as smell, sight, taste, hearing, and touch. This can be in contrast to an extended reality (XR) environment that may refer to a partially or wholly simulated environment that people may sense or interact with using an electronic device. The XR environment may include virtual reality (VR) content, mixed reality (MR) content, augmented reality (AR) content, or the like. Using an XR system, a portion of a person's physical motions, or representations thereof, may be tracked and, in response, properties of virtual objects in the XR environment may be changed in a way that complies with at least one law of nature. For example, the XR system may detect a user's head movement and adjust auditory and graphical content presented to the user in a way that simulates how sounds and views would change in a physical environment. In other examples, the XR system may detect movement of an electronic device (e.g., a laptop, tablet, mobile phone, or the like) presenting the XR environment. Accordingly, the XR system may adjust auditory and graphical content presented to the user in a way that simulates how sounds and views would change in a physical environment. In some instances, other inputs, such as a representation of physical motion (e.g., a voice command), may cause the XR system to adjust properties of graphical content.

Numerous types of electronic systems may allow a user to sense or interact with an XR environment. A non-exhaustive list of examples includes lenses having integrated display capability to be placed on a user's eyes (e.g., contact lenses), heads-up displays (HUDs), projection-based systems, head mountable systems, windows or windshields having integrated display technology, headphones/earphones, input systems with or without haptic feedback (e.g., handheld or wearable controllers), smartphones, tablets, desktop/laptop computers, and speaker arrays. Head mountable systems may include an opaque display and one or more speakers. Other head mountable systems may be configured to receive an opaque external display, such as that of a smartphone. Head mountable systems may capture images/video of the physical environment using one or more image sensors or capture audio of the physical environment using one or more microphones. Instead of an opaque display, some head mountable systems may include a transparent or translucent display. Transparent or translucent displays may have direct light representative of images to a user's eyes through a medium, such as a hologram medium, optical waveguide, an optical combiner, optical reflector, other similar technologies, or combinations thereof. Various display technologies, such as liquid crystal on silicon, LEDs, uLEDs, OLEDs, laser scanning light source, digital light projection, or combinations thereof, may be used. In some examples, the transparent or translucent display may be selectively controlled to become opaque. Projection-based systems may utilize retinal projection technology that projects images onto a user's retina or may project virtual content into the physical environment, such as onto a physical surface or as a hologram.

In some implementations, the devices 105 and 110 obtain physiological data (e.g., EEG amplitude/frequency, pupil modulation, eye gaze saccades, etc.) from the user 102 via one or more sensors (e.g., a user facing camera). For example, the device 110 obtains pupillary data (e.g., eye gaze characteristic data) and may determine a gaze direction of the user 102. While this example and other examples discussed herein illustrates a single device 110 in a real-world physical environment 100, the techniques disclosed herein are applicable to multiple devices and multiple sensors, as well as to other real-world environments/experiences. For example, the functions of the device 110 may be performed by multiple devices.

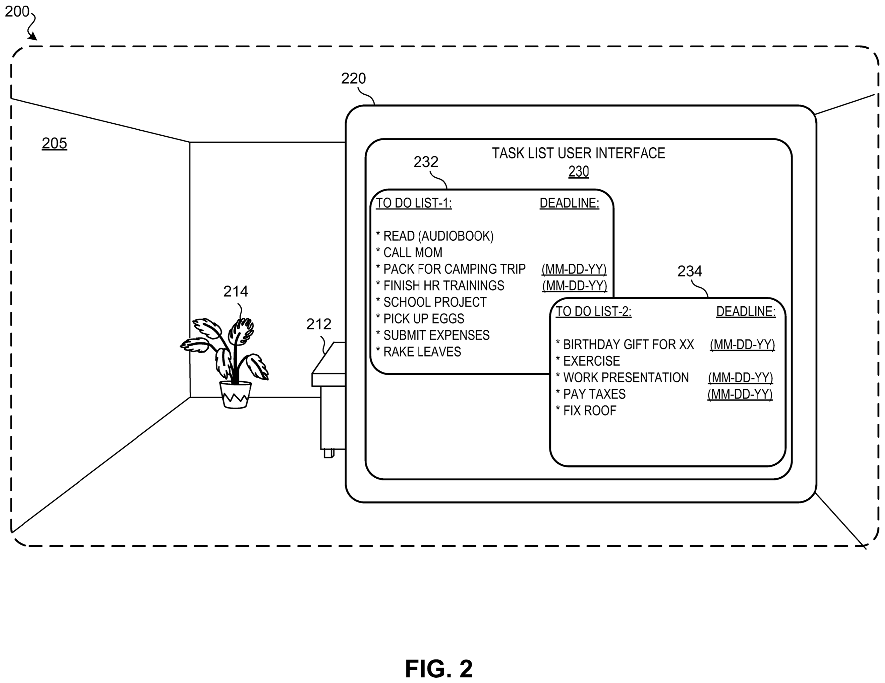

**Figure 2** illustrates an exemplary view 200 of a 3D environment 205 provided by an electronic device (e.g., device 105 or 110 of Figure 1). The view 200 may be a live camera view of the physical environment 100, a view of the physical environment 100 through a see-through display, or a view generated based on a 3D model corresponding to the physical environment 100. The view 200 may include depictions of aspects of the physical environment 100 such as a representation 212 of desk 112, representation 214 of plant 114, and the like, within a view of the 3D environment 205. In particular, view 200 illustrates providing a view of a user interface window, such as user interface 220. In this example of Figure 2, the view 200 of the XR environment that includes the user interface 220 that may be rendered based on the relative positioning between the content and a viewing position (e.g., based on the position of device 105 or 110). In particular, the view 200 may be rendered based on the relative positioning between the 3D model(s), a textured surface, and/or a viewing position (e.g., based on the position of device 105 or 110).

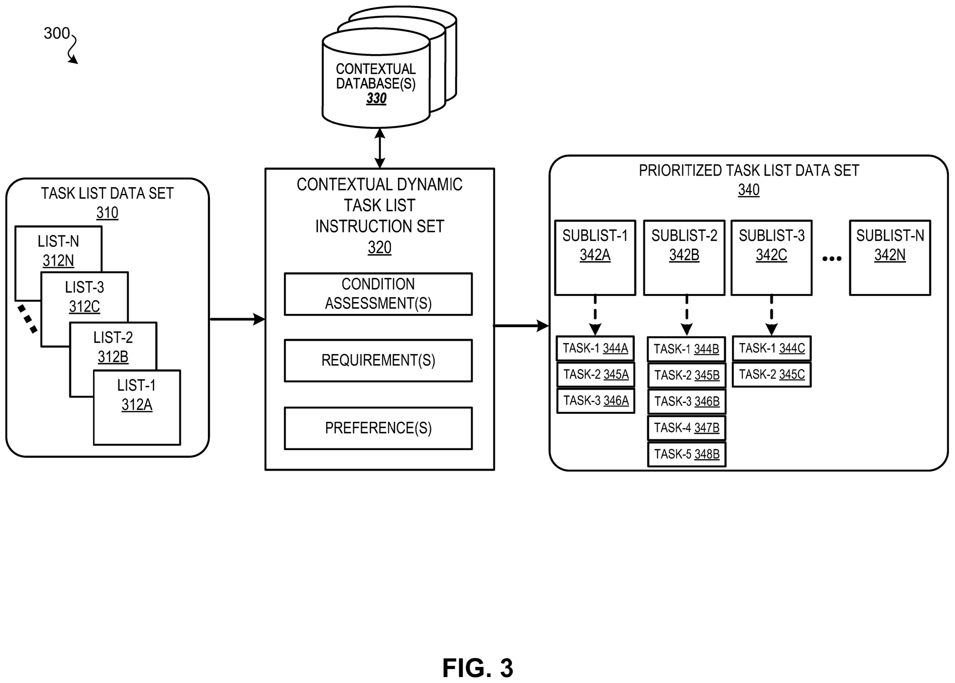

According to an exemplary embodiment, the user interface 220 includes a task list user interface 230 (e.g., an application for generating/editing one or more task lists). In some embodiments, the task list user interface 230 provides a user with a mechanism to enter and organize a task list (e.g., a "to-do list"). For example, the user may have entered one or more task lists that may be organized by the system and/or may include user-defined prioritization (e.g., a user may enter a scale of importance for each task or some of the tasks). In particular, as illustrated in Figure 2, the user has created a first task list 232 and a second task list 234. One or more of the tasks in each task list may include deadline information that can be customized by the user and/or updated by the contextual dynamic task list system(s) and process(es) described herein. Each task list may be randomly entered by the user, or organized by the user based on an intended context (e.g., work versus at home tasks). After entering the task lists, the system may generate prioritized sublists of contextually related tasks by identifying conditions associated with performance by the user of the tasks, as further described herein with reference to Figure 3.

**Figure 3** illustrates a system flow diagram of an example environment 300 in which a system may generate prioritized sublists of contextually related tasks by identifying conditions associated with performance by a user of the tasks, in accordance with some implementations. In some implementations, the system flow of the example environment 300 is performed on a device (e.g., device 105 or 110 of Figure 1), such as a mobile device, desktop, laptop, or server device. The images of the example environment 300 can be displayed on a device (e.g., device 110 of Figure 1) that has a screen for displaying images and/or a screen for viewing stereoscopic images such as an HMD (e.g., device 105 of Figure 1). In some implementations, the system flow of the example environment 300 is performed on processing logic, including hardware, firmware, software, or a combination thereof. In some implementations, the system flow of the example environment 300 is performed on a processor executing code stored in a non-transitory computer-readable medium (e.g., a memory).

In an exemplary implementation, the system flow of the example environment 300 acquires a task list data set 310, which includes one or more task lists (e.g., LIST-1 312A, LIST-2 312B, LIST-3 312B... LIST-N 312N, etc.). For example, the task list data set 310 includes any of the user entered tasks that a user may have created as illustrated in the task list user interface 230 in Figure 2 (e.g., first task list 232 and second task list 234).

The task list data set 310 is then sent to the contextual dynamic task list instruction set 320 for processing. The contextual dynamic task list instruction set 320 identifies conditions associated with performance by the user of the plurality of tasks, where the conditions may be identified based on an automated analysis of the user-defined actions (e.g., a CoDY algorithm and/or based on a machine learning). In some implementations, the conditions may correspond to identifying requirements associated with a particular task. For example, determining that buying eggs requires a condition, such as a store that sells eggs, determining that planning a camping trip requires a condition such as access to weather information. In some implementations, the conditions may correspond to preferences and/or preferred scenarios. For example, determining that there are multiple chores ideally performed according to a condition should be performed when there is sufficient time at the house for the user to accomplish the multiple chores. In some implementations, a database (e.g., contextual database(s) 330) may include an inventory so the contextual dynamic task list instruction set 320 can identify what items the user may already have (e.g., groceries already at home, equipment for camping, etc.).

After analyzing the inputted task list data set 310, the contextual dynamic task list instruction set 320 generates the prioritized task list data set 340. For example, the contextual dynamic task list instruction set 320 may identify condition assessments, requirements, and/or preferences associated with each task, and determines several different sublists (e.g., SUBLIST-1 342A, SUBLIST-2 342B, SUBLIST-3 342C... SUBLIST-N 342N). Each sublist 342 may then include one or more identified tasks (e.g., SUBLIST-1 342A includes task-1 344A, task-2 345A, and task-3 346A; SUBLIST-2 342B includes task-1 344B, task-2 345B, task-3 346B, task-4 347B, and task-5 348B; and SUBLIST-3 342C includes task-1 344C and task-2 345C).

In some implementations, one or more tasks may be identified within two or more sublists (e.g., task-2 345B and task-2 345C are the same task). For example, one sublist may be associated with planning a camping trip, and another sublist may be associated with buying groceries. However, the task of buying eggs may be needed for both groceries at home and for the camping trip, and thus may be associated with both generated sublists.

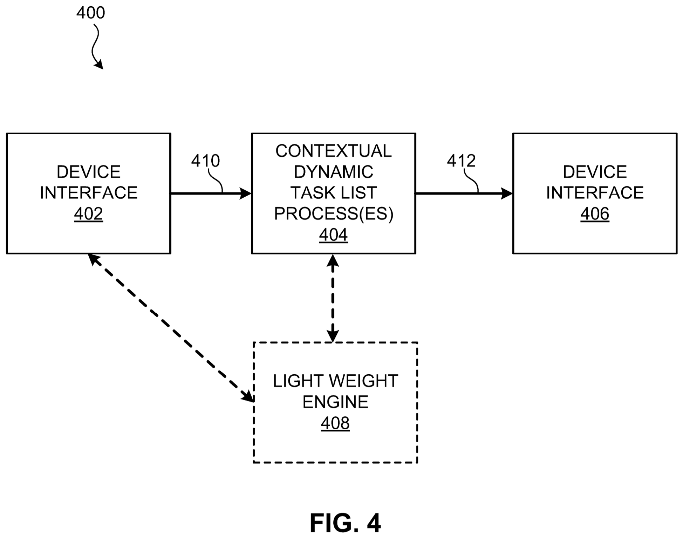

**Figure 4** illustrates a system diagram that includes a user device 400 (e.g., device 105, device 110, etc.) for a contextual dynamic task list process including a device interface 402, contextual dynamic task list process process(es) 404, and a device interface 406.

Inputs 410 from device interface 402 can be fed to CoDy task list process(es) 404. CoDy task list process(es) 404 can include one or more learning-based and/or non-learning-based models for perceiving, synthesizing, and inferring information. Persons skilled in the art will appreciate that the CoDy task list process(es) 404 can include any suitable number of CoDy task list processes to generate output 412 based on input 410. In some embodiments, user device 400 may optionally elect to use light weight engine instead of CoDy task list process(es) 404 to process data in situations where only one modality of data is being processed. The light weight engine 408 may be a non-learning network. Output from CoDy task list process(es) 404 is provided to device interface 406, where interface 406 disambiguates the recommendations. Based on current context and default settings provided by a user, interface 406 may select a subset of recommendations to surface to the user.

Persons of ordinary skill in the art will appreciate that CoDy task list process(es) 404 can include any suitable machine learning models that are well-known or widely available such as regression techniques, classification techniques, neural networks, and deep learning networks. For instance, CoDy task list process(es) 404 can include neural networks such as [remove ones that don't apply] Artificial Neural Network (ANN), Convolutional Neural Network (CNN), Recurrent Neural Network (RNN), Adversarial Network (GAN), Reinforcement Learning Model (RLM), Encoder/Decoder Networks, and/or Transformer-Based Models (e.g., Bidirectional Encoder Representations from Transformers (BERT), Generative Pre-trained Transformer (GPT), and/or a multi-modal large language model (LLM)). Additionally, or alternatively, persons of ordinary skill in the art will appreciate that CoDy task list process(es) 404 can be any suitable non-learning processes such as rule-based systems, heuristics, decision trees, knowledge-based systems, statistical or stochastic systems, and expert systems.

In instances where CoDy task list process(es) 404 is a machine-learning based model, CoDy task list process(es) 404 can be trained to identify one or more conditions associated with performance by a user of a plurality of tasks using one or more well-known or widely available training techniques such as supervised learning, semi-supervised learning, unsupervised learning, and/or reinforcement learning techniques. The training data can include historical task lists and associated performances and/or conditions associated with completing one or more tasks.

In some embodiments, CoDy task list process(es) 404 can be deployed as one or more generative models, where content is automatically generated by one or more computers in response to a request to generate the content. The automatically-generated content is optionally generated on-device (e.g., generated at least in part by a computer system at which a request to generate the content is received) and/or generated off-device (e.g., generated at least in part by one or more nearby computers that are available via a local network or one or more computers that are available via the internet). This automatically-generated content optionally includes visual content (e.g., images, graphics, and/or video), audio content, and/or text content.

In some embodiments, novel automatically-generated content is referred to as generative content (e.g., generative images, generative graphics, generative video, generative audio, and/or generative text). Generative content is typically generated based on a prompt input 410 to the CoDy task list process(es) 404. Device interface 402 optionally includes one or more pre-processing steps to adjust the input before it is used by an Al model to generate an output (e.g., adjustment to a user-provided prompt, creation of a system-generated prompt, and/or Al model selection). Device interface 406 optionally includes one or more post-processing steps to adjust the output 412 by the CoDy task list process(es) 404 (e.g., passing the Al model output to a different Al model, upscaling, downscaling, cropping, formatting, and/or adding or removing metadata) before the output 412 of the CoDy task list process(es) 404 used for other purposes such as being provided to a different software process for further processing or being presented (e.g., visually or audibly) to a user.

A prompt input 410 for generating generative content can include one or more of: one or more words (e.g., a natural language prompt that is written or spoken), one or more images, one or more drawings, and/or one or more videos. Generative pre-trained transformer models are a type of LLM that can be effective at generating novel generative content based on a prompt input 410. In some embodiments, the CoDy task list process(es) 404 uses a prompt input 410 that includes text to generate either different generative text, generative audio content, and/or generative visual content. In other embodiments, the CoDy task list process(es) 404 uses a prompt input 410 that includes visual content and/or an audio content to generate generative text (e.g., a transcription of audio and/or a description of the visual content). In yet other embodiments, the CoDy task list process(es) 404 uses a prompt input 410 that includes multiple types of content (e.g., text, images, audio, video, and/or other sensor data) to generate generative content. A prompt input 410 sometimes also includes values for one or more parameters indicating an importance of various parts of the prompt. Some prompt inputs 410 include a structured set of instructions that can be provided to the CoDy task list process(es) 404 that include phrasing, a specified style, relevant context (e.g., starting point content and/or one or more examples), and/or a role for the CoDy task list process(es) 404.

Generative content is generally based on the prompt but is not deterministically selected from pre-generated content and is, instead, generated using the prompt as a starting point. In some embodiments, pre-existing content (e.g., audio, text, and/or visual content) is used as part of the prompt for creating generative content (e.g., the pre-existing content is used as a starting point for creating the generative content). For example, a prompt input 410 could request that a block of text be summarized or rewritten in a different tone, and the output 412 would be generative text that is summarized or written in the different tone. Similarly a prompt input 410 could request that visual content be modified to include or exclude content specified by a prompt (e.g., removing an identified feature in the visual content, adding a feature to the visual content that is described in a prompt, changing a visual style of the visual content, and/or creating additional visual elements outside of a spatial or temporal boundary of the visual content that are based on the visual content). In some embodiments, a random or pseudo-random seed is used as part of the prompt input 410 for creating generative content (e.g., the random or pseudo-random seed content is used as a starting point for creating the generative content). For example, when generating an image from a diffusion model, a random noise pattern is iteratively denoised based on the prompt input 410 to generate an image. While specific types of CoDy task list processes 404 have been described herein, it should be understood that a variety of different CoDy task list processes could be used to generate generative content based on a prompt.

In instances where CoDy task list process(es) 404 is a non-learning-based system, CoDy task list process(es) 404 can use a pre-defined set of rules or a pre-defined structure to make decisions based on the inputs that the process sees. For example, the CoDy task list process(es) 404 can sequentially process each word in an input phrase and count the number of times that the word appears. It can then prepare the summary using words that appear with the greatest frequency.

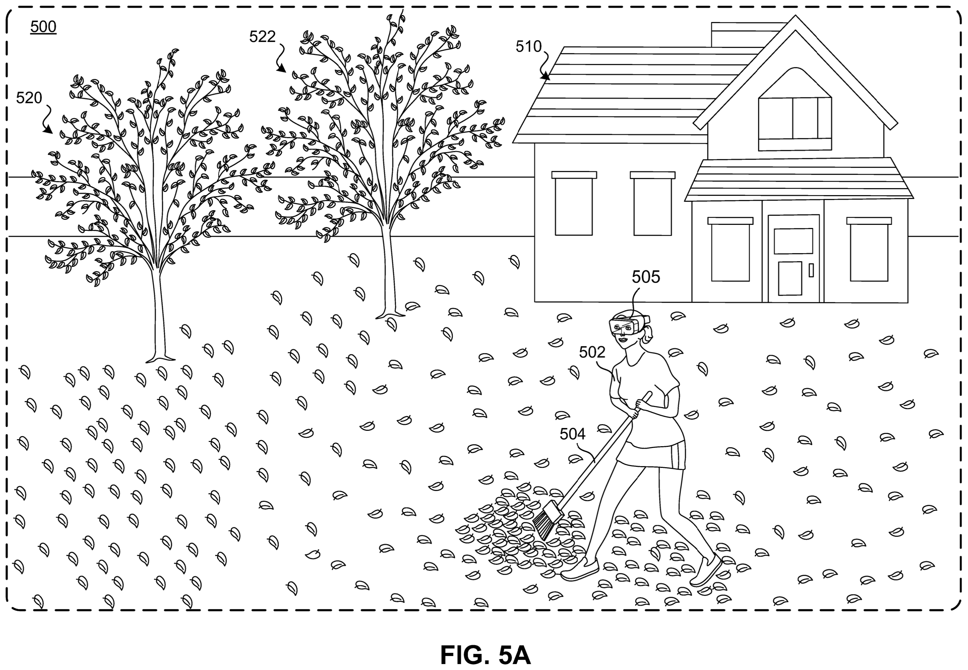

**Figure 5A** illustrates an exemplary electronic device 505 operating in a physical environment 500 in accordance with some implementations. For example, electronic device 505 is an HMD similar to device 105 described herein. In the example of Figure 5A, the physical environment 500 is outside and includes a house 510, a tree 520, and a tree 522. Additionally, the physical environment 100 includes a user 502 wearing the electronic device 505 (e.g., an HMD) while raking leaves from the trees 520, 522 and holding a rake 504.

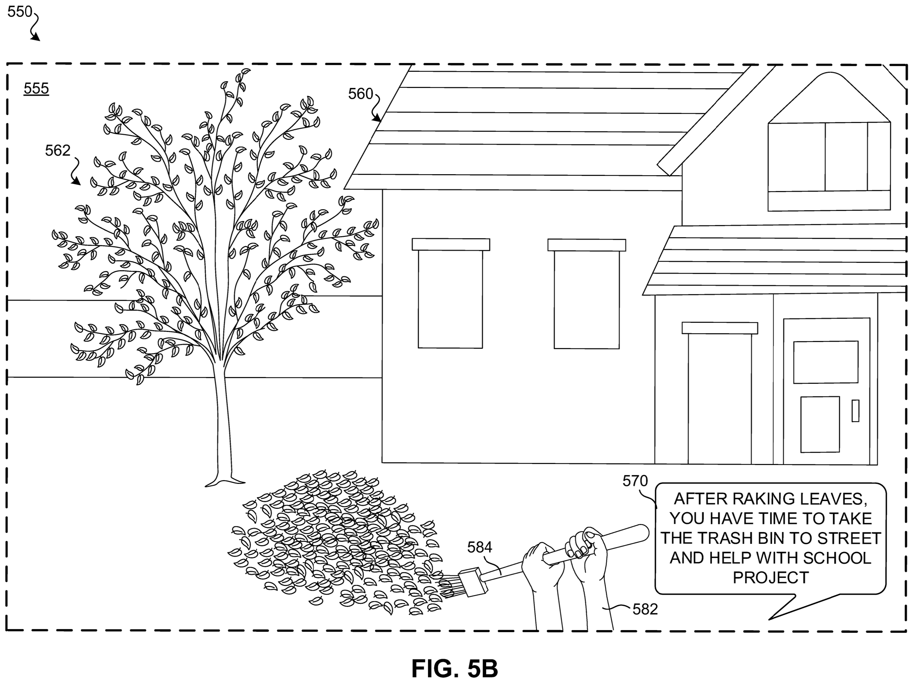

**Figure 5B** illustrates an exemplary view 550 for a frame of an extended reality (XR) environment (e.g., 3D environment 555) of the physical environment 500 of Figure 5A and provided by a device 505 of Figure 5A, in accordance with some implementations. The view 550 may be a live camera view of the physical environment 500, a view of the physical environment 500 through a see-through display, or a view generated based on a 3D model corresponding to the physical environment 500. The view 550 may include depictions of aspects of the physical environment 500 such as a representation 560 of house 510, representation 562 of tree 522, representation 582 of the user 502 (e.g., the user's 502 hands), and a representation 584 of the rake 504, within a view of the 3D environment 555. In particular, the view 550 is from the perspective of the user 502 and includes a virtual notification 570 while the user 502 is performing a house chore (e.g., raking leaves). In particular, the virtual notification 570 provides the user 502 with a list of identified subtasks that could be performed after completing the current task (e.g., raking leaves). For example, the notification provides the user 502 with specific tasks that may be accomplished at the current location (e.g., at home), and likely could be accomplished (e.g., a performed action by the user) within a determined time before another task or an identified upcoming event (e.g., prepare for going out to a dinner that night and determined based on a calendar entry). In other words, the system may identify relevant tasks on the user task list that could be accomplished while at home. In some implementations, the system may suggest tasks in a specific order based on ease of completion (e.g., suggest tasks done outside of the house first before tasks done inside the house because the user is already outside of the house).

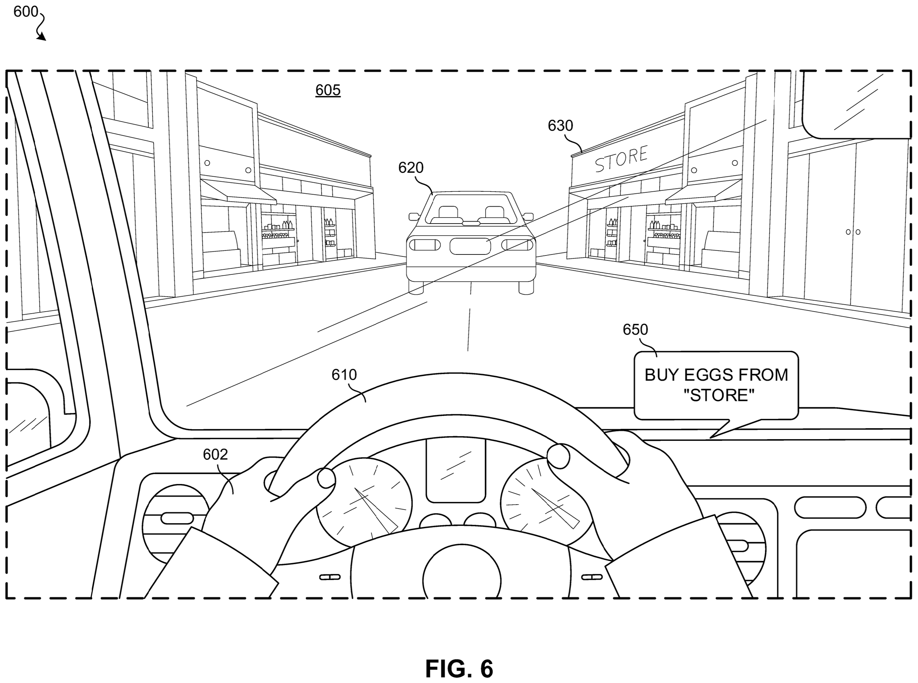

**Figure 6** illustrates an exemplary view 600 for a frame of an XR environment (e.g., 3D environment 605) of a physical environment provided by a device (e.g., device 505 of Figure 5A), in accordance with some implementations. The view 600 may be a live camera view of the physical environment, a view of the physical environment through a see-through display, or a view generated based on a 3D model corresponding to the physical environment. The view 600 may include depictions of aspects of the physical environment such as representation 602 of a driver (e.g., user 102), representation 610 of the vehicle of the driver, representation 620 of a vehicle in front of the driver, and representation 630 of a store within a view of the 3D environment 605. The view 600 is from the perspective of the driver (e.g., representation 602) and includes a virtual notification 650 while the driver is driving (e.g., driving home from work). In particular, the virtual notification 650 provides the driver with an identified task that could be performed during or in conjunction with a particular activity (e.g., driving home). For example, the notification 650 provides the driver with a specific task that may be accomplished at the current location (e.g., driving by the store), and likely could be accomplished (e.g., a performed action by the user) within a determined time before another task or an identified upcoming event (e.g., prepare for going out to a dinner that night and determined based on a calendar entry). In other words, the system may identify relevant tasks on a user task list that could be accomplished while driving home (e.g., "buy eggs from 'store'").

In the example illustrated in Figure 6, the user (e.g., a driver - depiction 602), is wearing the device (e.g., an HMD, such as device 105 or device 505), and the notification 650 may be a virtual element that is presented as augmented reality as the user is driving. In some implementations, the notification 650 may include or may only be an audio notification. Alternatively, in some implementations, the device of the driver may be a handheld device (e.g., device 110 of Figure 1), thus while driving the driver would not want to have to touch the device (e.g., a hands-free application). Thus, the notification 650 may be an audio alert that would allow the user to talk to an application associated with the contextual dynamic task list system. For example, an alert sound notification may be provided, and if the driver says a command prompt (e.g., "What is the alert notification?"), then the system may provide the text from the notification 650 via audible sound only: "Reminder - buy eggs from the "store" up ahead on the right," or a similar notification.

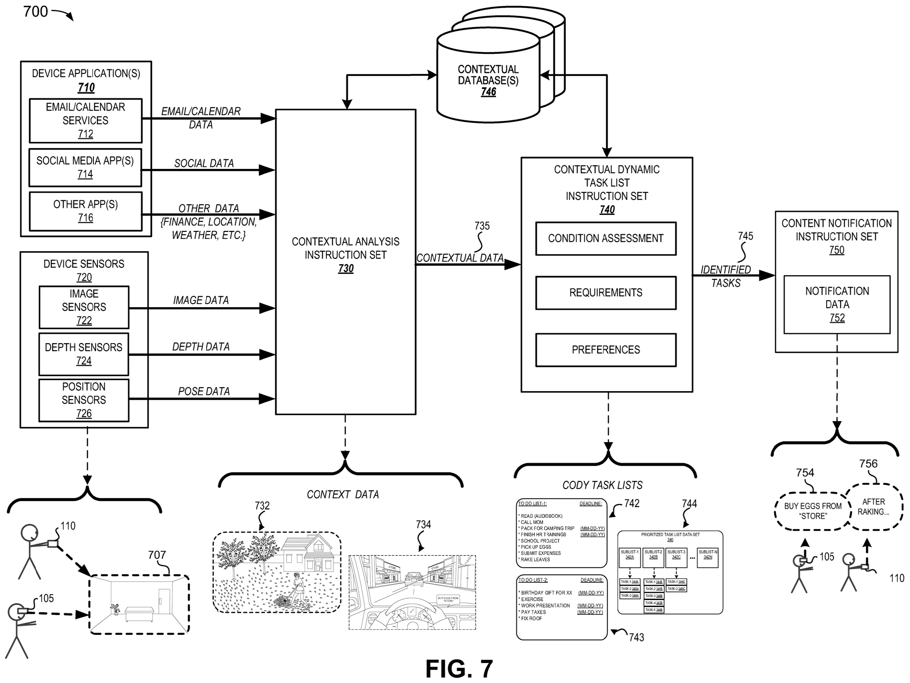

**Figure 7** is a block diagram illustrating a process 700 in which a system may generate notifications based on identifying a subset of tasks from a task list using determined contextual-based data, according to some implementations. In some implementations, the process 700 may be performed on a device (e.g., device 105 or 110 of Figure 1), such as a mobile device, desktop, laptop, or server device. The content of the process 700 can be displayed on a device (e.g., device 110 of Figure 1) that has a screen for displaying images and/or a screen for viewing stereoscopic images such as an HMD (e.g., device 105 of Figure 1). In some implementations, the process 700 is performed on processing logic, including hardware, firmware, software, or a combination thereof. In some implementations, the process 700 is performed on a processor executing code stored in a non-transitory computer-readable medium (e.g., a memory).

In an exemplary implementation, the process 700 may acquire different application data from device application(s) 710, sensor data from one or more sensors 720, and other data. The application data from device application(s) 710 may include email/calendar data from email/calendar services 712, social data from social media app(s) 714, and/or other data from other apps(s) 716 (e.g., financial data, location-based information, weather data, and the like). Additionally, the sensor data from the one or more sensors 720 may include image data from image sensors 722, depth data from depth sensors 724, device pose data from position sensors 726, or a combination thereof for each frame of a sequence of frames of data. For example, as a user is holding device 110 or wearing a device 105 (HMD), sensor data may be collected from a user's current environment (e.g., image 707).

In an example implementation, the pose data may include camera positioning information such as position data (e.g., position and orientation data, also referred to as pose data) from position sensors 726 of a physical environment. The position sensors 726 may be sensors on a viewing device (e.g., device 105 or 110 of Figure 1). For the pose data, some implementations include a visual inertial odometry (VIO) system to determine equivalent odometry information using sequential camera images (e.g., light intensity data) to estimate the distance traveled. Alternatively, some implementations of the present disclosure may include a SLAM system (e.g., using position sensors 726). The SLAM system may include a multidimensional (e.g., 3D) laser scanning and range measuring system that is GPS- independent and that provides real-time simultaneous location and mapping. The SLAM system may generate and manage data for a very accurate point cloud that results from reflections of laser scanning from objects in an environment. Movements of any of the points in the point cloud are accurately tracked over time, so that the SLAM system can maintain precise understanding of its location and orientation as it travels through an environment, using the points in the point cloud as reference points for the location.

In an example implementation, the process 700 includes a contextual analysis instruction set 730 that is configured with instructions executable by a processor to obtain application data from device application(s) 710 and the sensor data from one or more sensors 720, and determine contextual data 535 associated with the user and the user's environment for a current period of time, using one or more of the techniques disclosed herein. For example, contextual analysis instruction set 730 may identify a context associated with a current physical environment such as, *inter alia,* raking leaves outside as illustrated in image 732 (e.g., Figure 5A) and driving by a particular store as illustrated in image 734 (e.g., Figure 6). The context of the actions of the user in a particular environment is then sent as contextual data 735 to the contextual dynamic task list instruction set 740.

In some implementations, the contextual dynamic task list instruction set 730 identifies a dichotomy of relevant actions by understanding a superset of activities of what a user may be active in and using this contextual information as building blocks to determine a task list. The contextual dynamic task list system may provide a foundation for a proactive agent capable of surfacing information, providing corrective feedback, and/or completing future actions to seamlessly assist the user. Such a contextual dynamic task list system may be designed to be built upon by a user intent understanding layer which models the opportune time to surface the relevant top suggested action to the user within the action list (or task list).

In some implementations, the contextual dynamic task list system may need to scale one or more of the task lists and keep adding actions/aspects that is expanded as the user uses the system. In some implementations, the contextual dynamic task list instruction set 730 may assist a user to identify tasks that the user may not normally think of or have any prior experience with. For instance, the user may be planning to go on a camping trip to a certain location, but may have no idea that the specific location has a lot of mosquitos and needs a mosquito-repellant. Thus, at a relevant opportunity, for instance when the user is at a grocery store, the contextual dynamic task list instruction set 730 may surface the necessary information to the user with relevant context. This requires the agent to first understand aspects in which the user can be helped, that the user might not have thought about, but is highly relevant from the information available online. The contextual dynamic task list instruction set 730 may generate a new actionable task list item (e.g., recommend buying mosquito repellant for the camping trip). Furthermore, this new actionable task list item would require the contextual dynamic task list system to identify an opportune time to surface the action. Thus, the contextual dynamic task list system may be flexible to have an expanding foundation and quick enough in decision making to provide quick and relevant tasks to a user. Some tasks may be more generic to several users, however, the contextual dynamic task list instruction set 730 may be tailored to each individual user based on learning from one or more activities of the user. Thus, the contextual dynamic task list system may keep building different options for each user while preserving privacy.

In an example implementation, the process 700 further includes a contextual dynamic task list instruction set 740 that is configured with instructions executable by a processor to obtain the contextual data 735 from the contextual analysis instruction set 730 and identify one or more relevant tasks (e.g., identified tasks 745) from one or more task lists (e.g., task list 742, task list 743, etc.) and/or a prioritized task list (e.g., prioritized task list 744) using one or more techniques discussed herein or as otherwise may be appropriate. For example, the contextual dynamic task list instruction set 740 may identify conditions associated with performance by the user of the plurality of tasks, where the conditions may be identified based on an automated analysis of the user-defined actions (e.g., a CoDY algorithm and/or based on a machine learning). In some implementations, identifying conditions associated with performance by the user of the plurality of tasks includes identifying one or more requirements associated with completing the task. For example, determining that buying eggs requires a condition, such as a store that sells eggs (e.g., view 600 of Figure 6), determining that planning a camping trip requires a condition such as access to weather information. In some implementations, identifying conditions associated with performance by the user of the plurality of tasks includes identifying that a first condition associated with completing a first task is the same condition associated with completing a second task (e.g., preferences/preferred scenarios). For example, determining that there are multiple chores ideally performed according to a condition should be performed when there is sufficient time at the house for the user to accomplish the multiple chores (e.g., determining a user has time for other chores after raking leaves, as illustrated in view 550 of Figure 5B).

In some implementations, a database (e.g., contextual database(s) 746) may include an inventory so the contextual dynamic task list instruction set 740 can identify what items the user may already have (e.g., groceries already at home, i.e., already have eggs if looking to make cookies, equipment for camping, etc.). In some implementations, the contextual analysis instruction set 730 has access to the contextual database(s) 746 and may also update an associated inventory of what the user may or may not have as far as physical items. Additionally, or alternatively, the contextual database(s) 746 may store other contextual-based data associated with the user for maintaining and prioritizing task lists that are customized to each user (e.g., digital shopping carts online, work-based project data, storing workout data, and the like).

In some implementations, in addition to the user creating the tasks, the list of tasks may be created and/or edited by the user in assistance with the contextual dynamic task list instruction set 740 of a device, or the contextual dynamic task list instruction set 740 may create and/or edit the tasks automatically. For example, if the user has camping in their schedule, then the contextual dynamic task list instruction set 740 may create a proposed list of tasks associated with camping, and then dynamically check off and notify the user of each of those tasks. The list of tasks may be created with some of the tasks already checked off based on data in contextual database 746. For instance, if camping is in the schedule and the user already has a tent, then the list of tasks will include "acquire a tent" but have it already checked off.

In an example implementation, the process 700 further includes a content notification instruction set 750 that is configured with instructions executable by a processor to obtain the identified tasks 745 from the contextual dynamic task list instruction set 740 and generate notification data 752 using one or more techniques discussed herein or as otherwise may be appropriate. For example, the content notification instruction set 750 may receive an identified task to alert the user that they are driving near a particular store that sells eggs and generates a notification accordingly (e.g., notification 754). Additionally, the content notification instruction set 750 may receive an identified task to alert the user that they could accomplish other tasks at home once they've completed a current task (e.g., raking leaves), and generates a notification accordingly (e.g., notification 756). In some implementations, the notification may notify the user that an identified task has been completed, and display the task checked off, marked out, or show the task actively being checked off, which may bring a satisfaction emotion to the user to see the task being marked off and completed from the task list.

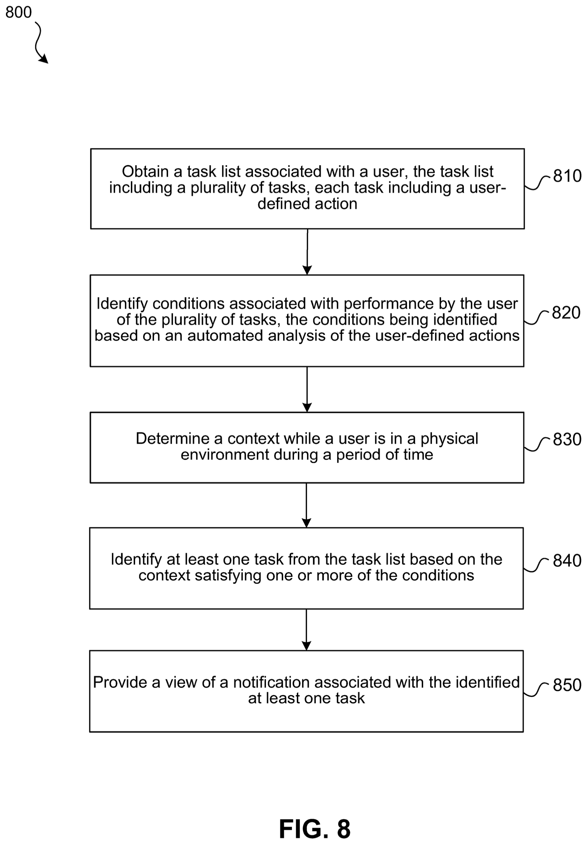

**Figure 8** is a flowchart illustrating a method 800 for identifying a subset of tasks from a task list based on determining a context of a user in a physical environment in accordance with some implementations. In some implementations, a device such as electronic device 110 performs method 800. In some implementations, method 800 is performed on a mobile device (e.g., device 110), desktop, laptop, HMD (e.g., device 105), or server device. The method 800 is performed by processing logic, including hardware, firmware, software, or a combination thereof. In some implementations, the method 800 is performed on a processor executing code stored in a non-transitory computer-readable medium (e.g., a memory). In some implementations, the device performing the method 800 includes a processor and one or more sensors.

Various implementations of the method 800 provide a process that focus on a contextual dynamic (CoDy) task list that dynamically re-prioritizes and/or surfaces tasks depending on the user's contextual environment (e.g., a scene understanding of a user's physical environment). For example, a notification may be provided to the user within a view on a device, such as a mobile device or an HMD. Some implementations involve a CoDy engine that confers contextual intelligence for an artificial intelligence agent to pre-fetch information or notify the user only when relevant. For example, a user being notified to "pick up eggs" on their to-do list, but only when contextually relevant such as at the grocery store or driving towards the store and not notified when the user is working at the office.

At block 810, the method 800 obtains a task list associated with a user, the task list including a plurality of tasks, each task including a user-defined action. For example, a task list may be based on a user-defined prioritization and the prioritization may be updated. For example, as illustrated in Figure 2, the user interface 230 is an application that may be used for generating/editing one or more task lists, which may include user-defined prioritization.

In some implementations, the task list includes a plurality of subsets of tasks, each subset of tasks including a context-based hierarchy. For example, pick up groceries may be a task, and a subset of tasks may include a grocery list. In some implementations, the task list includes a context-based hierarchy that is prioritized based on one or more prioritization variables. In some implementations, the one or more prioritization variables may include added variables for prioritizing a task list using contextual reasoning in a multimodal sense. In some implementations, the prioritization variables may include payment history data associated with the user, such as payment application access (e.g., where money is spent). In some implementations, the prioritization variables may include location information associated with the device in the physical environment during the period of time (e.g., location-based information). In some implementations, the prioritization variables may include scheduling information associated with the user during the period of time. For example, the system may access a calendar application and/or an email application on the user's device to identify reservations or other scheduled events.

In some implementations, the prioritization variables may include weather information during the period of time or during a future period of time associated with completion of a particular task. For example, obtaining weather-based information for planning a camping trip, the dynamic task list could add or recommend rain gear if rain is expected. In some implementations, the prioritization variables may include semantic information associated with completion of a particular task. For example, semantic clustering, such as fixing a light bulb, fixing a hose, and similar house chores around the house that are adjacent to each other, thus the tasks could be grouped together to be accomplished back-to-back. In addition to the user creating the tasks, the list of tasks may be created and/or edited by the user in assistance with the device, or the device may create and/or edit the tasks automatically. For example, if the user has camping in their schedule, then the system (contextual dynamic task list instruction set 740) may create a proposed list of tasks associated with camping, and then dynamically check off and notify the user of each of those tasks. The list of tasks may be created with some of the tasks already checked off based on data in contextual database 746. For instance, if camping is in the schedule and the user already has a tent, then the list of tasks will include "acquire a tent" but have it already checked off.

At block 820, the method 800 identifies conditions associated with performance by the user of the plurality of tasks, the conditions being identified based on an automated analysis of the user-defined actions. For example, as illustrated in Figure 3, the contextual dynamic task list instruction set 320 identifies conditions associated with performance by the user of the plurality of tasks, where the conditions may be identified based on an automated analysis of the user-defined actions (e.g., a CoDY algorithm and/or based on a machine learning). In some implementations, identifying conditions associated with performance by the user of the plurality of tasks includes identifying one or more requirements associated with completing the task. For example, determining that buying eggs requires a condition, such as a store that sells eggs (e.g., view 600 of Figure 6), determining that planning a camping trip requires a condition such as access to weather information. In some implementations, identifying conditions associated with performance by the user of the plurality of tasks includes identifying that a first condition associated with completing a first task is the same condition associated with completing a second task (e.g., preferences/preferred scenarios). For example, determining that there are multiple chores ideally performed according to a condition should be performed when there is sufficient time at the house for the user to accomplish the multiple chores (e.g., determining a user has time for other chores after raking leaves, as illustrated in view 550 of Figure 5B). In some implementations, a database (e.g., contextual database(s) 330) may include an inventory so the contextual dynamic task list instruction set 320 can identify what items the user may already have (e.g., groceries already at home, i.e., already have eggs if looking to make cookies, equipment for camping, etc.).

At block 830, the method 800 determines a context while a user is in a physical environment during a period of time. In some implementations, context may be determined based on sensor data, image data, location data, email/calendar data, a scene understanding of the room or outside, semantic data, physiological data of the user, or a combination thereof. For example, as illustrated in Figure 5A, the system can determine that the user 502 is outside, at a particular and known location (e.g., his or her house 510), and performing a particular task (e.g., raking leaves). The system can also determine whether or not the user 502 has additional tasks or events that are schedule later that day (e.g., accessing a calendar application or a social application).

In some implementations, sensor data may be obtained for a sequence of frames by one or more sensors in a physical environment. In some implementations, the sensor data including image data, depth data, device pose data, or a combination thereof for each frame of the sequence of frames. In some implementations, a sensor data signal includes image data (e.g., RGB data), depth data (e.g., lidar-based depth data, and/or densified depth data), device or head pose data, or a combination thereof, for each frame of the sequence of frames. For example, sensors on a device (e.g., camera's, IMU, etc. on device 105 or 110) can capture information about the position, location, motion, pose, etc., of the device and/or of the one or more objects in the physical environment. The depth sensor signal may include distance-to-object information such as lidar-based depth (e.g., depth information at various points in the scene at 1 HZ) and/or densified depth. In some implementations, the depth sensor signal includes distance information between a 3D location of the device and a 3D location of a surface of an object.

At block 840, the method 800 identifies at least one task from the task list based on the context satisfying one or more of the conditions. For example, as illustrated in Figure 7, the contextual dynamic task list instruction set 740 acquires the contextual data 735 and determines identified tasks. In some implementations, identifying the at least one task from the task list based on the context satisfying one or more of the conditions comprises identifying one or more tasks that satisfy a particular condition based on the physical environment and the period of time. In some implementations, a CoDy engine (e.g., contextual dynamic task list instruction set 740) may confer contextual intelligence for an artificial intelligence agent to pre-fetch information or notify the user only when relevant. For example, a user being notified to "pick up eggs" on their to-do list, but only when contextually relevant such as at the grocery store or driving towards the store and on the way home with enough time in the schedule to go into the store to buy eggs and not notified when the user is working at the office (e.g., to be notified to buy eggs at work would be a nuisance for the user) or on the way to the office to work even though the user may be passing by the store (e.g., there is no place to store eggs in the office to keep them fresh or there is not enough time (based on traffic information, navigational data, meeting schedule, etc.) to go into the store to buy eggs).

At block 850, the method 800 provides a view of a notification associated with the identified at least one task. For example, notification 570 in Figure 5B notifies the user of potential other tasks that could be accomplished while at home (e.g., house chores, help with a child's project, etc.), and notification 650 in Figure 6 notifies the user of a potential task that could be accomplished while driving by or close to a store (e.g., "buy eggs from store"). The notification could be a virtual element (e.g., augmented reality sticker) and/or an audio notification to alert the user of a potential task. In some implementations, the notification may notify the user when a task is completed and display the completed task among a list of other related tasks (e.g., a related subset of tasks) to remind the user of other related tasks that he or she could choose to complete.

In some implementations, each task includes a user-defined prioritization level. For example, a user may be able to select a level of priority for each task (e.g., rate from priority level 1 to 10, use a sliding scale, or the like). In some implementations, a prioritization level of one or more tasks is modified based on the determined context while the user is in the physical environment during the period of time. For example, task list prioritization may be automatically updated based on a current context.

In some implementations, the method 800 further includes determining that a first task of the subset of the tasks is completed and updating the task list based on the completed task (e.g., updating or removing a task from the list). In some implementations, a first task of the plurality of tasks includes a list of subtasks. For example, activities may be defined as events that consist of a sequence of subtasks to complete before, during and after the identified activity.

In some implementations, determining the context while the user is in the physical environment during the period of time is based on physiological sensor data of the user. For example, physiological sensor data may include eye gaze data, EEG, EKG signals, and the like to determine one or more states of the user (e.g., stressed state versus a relaxed state). In other words, based on the physiological sensor data, the system may determine to not provide additional tasks to the user if the user is stressed about completing a current task at work and does not need to be bothered to complete another work task that may not have an immediate deadline or can be postponed.

In some implementations, a location of the view of the notification is based on the determined context while the user is in the physical environment during the period of time. For example, when wearing an HMD (e.g., device 105) or holding a mobile device (e.g., device 110), the notification may be displayed differently while driving than walking or on public transportation etc.

In some implementations, the contextual dynamic task list system may need to scale one or more of the task lists and keep adding actions/aspects that is expanded as the user uses the system. In some implementations, the contextual dynamic task list system may assist a user to identify tasks that the user may not normally think of or have any prior experience with. For instance, the user may be planning to go on a camping trip to a certain location, but may have no idea that the specific location has a lot of mosquitos and needs a mosquito-repellant. Thus, at a relevant opportunity, for instance when the user is at a grocery store, the contextual dynamic task list system may surface the necessary information to the user with relevant context. This requires the agent to first understand aspects in which the user can be helped, that the user might not have thought about, but is highly relevant from the information available online. The contextual dynamic task list system may generate a new actionable task list item (e.g., recommend buying mosquito repellant for the camping trip). Furthermore, this new actionable task list item would require the contextual dynamic task list system to identify an opportune time to surface the action. Thus, the contextual dynamic task list system may be flexible to have an expanding foundation and quick enough in decision making to provide quick and relevant tasks to a user. Some tasks may be more generic to several users, however, the contextual dynamic task list system may be tailored to each individual user based on learning from one or more activities of the user. Thus, the contextual dynamic task list system may keep building different options for each user while preserving privacy.

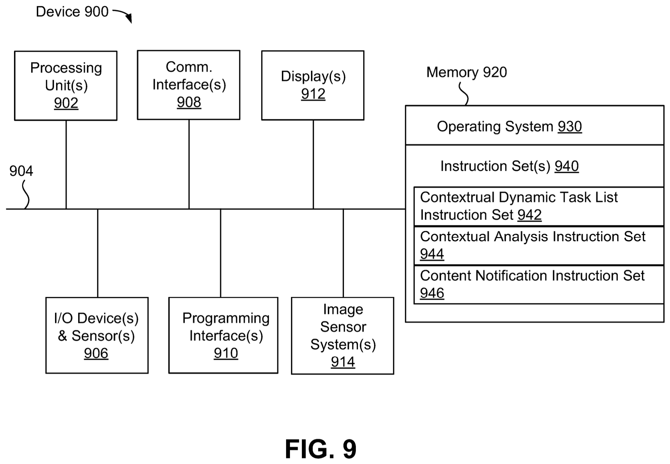

**Figure 9** is a block diagram of an example device 900. Device 900 illustrates an exemplary device configuration for devices described herein (e.g., devices 105, 210, 265, 410, etc.). While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the device 900 includes one or more processing units 902 (e.g., microprocessors, ASICs, FPGAs, GPUs, CPUs, processing cores, and/or the like), one or more input/output (I/O) devices and sensors 906, one or more communication interfaces 908 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, SPI, I2C, and/or the like type interface), one or more programming (e.g., I/O) interfaces 910, one or more displays 912, one or more interior and/or exterior facing image sensor systems 914, a memory 920, and one or more communication buses 904 for interconnecting these and various other components.

In some implementations, the one or more communication buses 904 include circuitry that interconnects and controls communications between system components. In some implementations, the one or more I/O devices and sensors 906 include at least one of an inertial measurement unit (IMU), an accelerometer, a magnetometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some implementations, the one or more displays 912 are configured to present a view of a physical environment or a graphical environment to the user. In some implementations, the one or more displays 912 correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more displays 912 correspond to diffractive, reflective, polarized, holographic, etc. waveguide displays. In one example, the device 10 includes a single display. In another example, the device 10 includes a display for each eye of the user.

In some implementations, the one or more image sensor systems 914 are configured to obtain image data that corresponds to at least a portion of the physical environment 102. For example, the one or more image sensor systems 914 include one or more RGB cameras (e.g., with a complimentary metal-oxide-semiconductor (CMOS) image sensor or a charge-coupled device (CCD) image sensor), monochrome cameras, IR cameras, depth cameras, event-based cameras, and/or the like. In various implementations, the one or more image sensor systems 914 further include illumination sources that emit light, such as a flash. In various implementations, the one or more image sensor systems 914 further include an on-camera image signal processor (ISP) configured to execute a plurality of processing operations on the image data.

The memory 920 includes high-speed random-access memory, such as DRAM, SRAM, DDR RAM, or other random-access solid-state memory devices. In some implementations, the memory 920 includes non-volatile memory, such as one or more magnetic disk storage devices, optical disk storage devices, flash memory devices, or other non-volatile solid-state storage devices. The memory 920 optionally includes one or more storage devices remotely located from the one or more processing units 902. The memory 920 includes a non-transitory computer readable storage medium.

In some implementations, the memory 920 or the non-transitory computer readable storage medium of the memory 920 stores an optional operating system 930 and one or more instruction set(s) 940. The operating system 930 includes procedures for handling various basic system services and for performing hardware dependent tasks. In some implementations, the instruction set(s) 940 include executable software defined by binary information stored in the form of electrical charge. In some implementations, the instruction set(s) 940 are software that is executable by the one or more processing units 902 to carry out one or more of the techniques described herein.

The instruction set(s) 940 include a contextual dynamic task list instruction set 942, a contextual analysis instruction set 944, and a content notification instruction set 946. The instruction set(s) 940 may be embodied a single software executable or multiple software executables.

In some implementations, the contextual dynamic task list instruction set 942 is executable by the processing unit(s) 902 to generate prioritized task lists and identify one or more tasks based on contextual analysis data. To these ends, in various implementations, the instruction includes instructions and/or logic therefor, and heuristics and metadata therefor.

In some implementations, the contextual analysis instruction set 944 is executable by the processing unit(s) 902 to determine a context of an environemnt and/or a user with an environment by using one or more of the techniques discussed herein or as otherwise may be appropriate. To these ends, in various implementations, the instruction includes instructions and/or logic therefor, and heuristics and metadata therefor.

In some implementations, the content notification instruction set 946 is executable by the processing unit(s) 902 to generate notifications using one or more of the techniques discussed herein or as otherwise may be appropriate. To these ends, in various implementations, the instruction includes instructions and/or logic therefor, and heuristics and metadata therefor.

Although the instruction set(s) 940 are shown as residing on a single device, it should be understood that in other implementations, any combination of the elements may be located in separate computing devices. Moreover, Figure 9 is intended more as functional description of the various features which are present in a particular implementation as opposed to a structural schematic of the implementations described herein. As recognized by those of ordinary skill in the art, items shown separately could be combined and some items could be separated. The actual number of instructions sets and how features are allocated among them may vary from one implementation to another and may depend in part on the particular combination of hardware, software, and/or firmware chosen for a particular implementation.

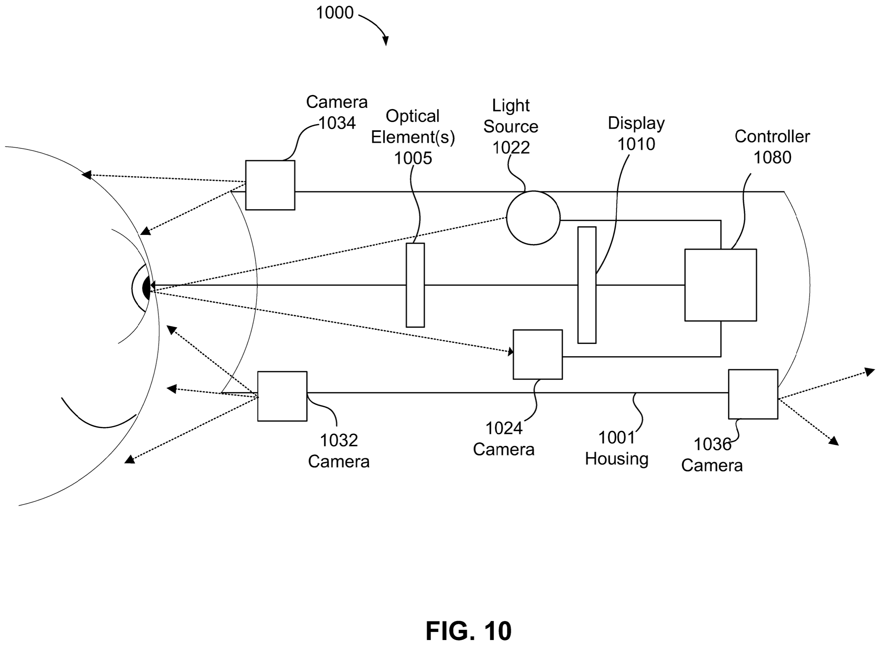

**Figure 10** illustrates a block diagram of an exemplary head-mounted device 1000 in accordance with some implementations. The head-mounted device 1000 includes a housing 1001 (or enclosure) that houses various components of the head-mounted device 1000. The housing 1001 includes (or is coupled to) an eye pad (not shown) disposed at a proximal (to the user 25) end of the housing 1001. In various implementations, the eye pad is a plastic or rubber piece that comfortably and snugly keeps the head-mounted device 1000 in the proper position on the face of the user 25 (e.g., surrounding the eye 35 of the user 25).

The housing 1001 houses a display 1010 that displays an image, emitting light towards or onto the eye of a user 25. In various implementations, the display 1010 emits the light through an eyepiece having one or more optical elements 1005 that refracts the light emitted by the display 1010, making the display appear to the user 25 to be at a virtual distance farther than the actual distance from the eye to the display 1010. For example, optical element(s) 1005 may include one or more lenses, a waveguide, other diffraction optical elements (DOE), and the like. For the user 25 to be able to focus on the display 1010, in various implementations, the virtual distance is at least greater than a minimum focal distance of the eye (e.g., 7 cm). Further, in order to provide a better user experience, in various implementations, the virtual distance is greater than 1 meter.

The housing 1001 also houses a tracking system including one or more light sources 1022, camera 1024, camera 1032, camera 1034, camera 1036, and a controller 1080. The one or more light sources 1022 emit light onto the eye of the user 25 that reflects as a light pattern (e.g., a circle of glints) that can be detected by the camera 1024. Based on the light pattern, the controller 1080 can determine an eye tracking characteristic of the user 25. For example, the controller 1080 can determine a gaze direction and/or a blinking state (eyes open or eyes closed) of the user 25. As another example, the controller 1080 can determine a pupil center, a pupil size, or a point of regard. Thus, in various implementations, the light is emitted by the one or more light sources 1022, reflects off the eye of the user 25, and is detected by the camera 1024. In various implementations, the light from the eye of the user 25 is reflected off a hot mirror or passed through an eyepiece before reaching the camera 1024.

The display 1010 emits light in a first wavelength range and the one or more light sources 1022 emit light in a second wavelength range. Similarly, the camera 1024 detects light in the second wavelength range. In various implementations, the first wavelength range is a visible wavelength range (e.g., a wavelength range within the visible spectrum of approximately 400-700 nm) and the second wavelength range is a near-infrared wavelength range (e.g., a wavelength range within the near-infrared spectrum of approximately 700-1400 nm).

In various implementations, eye tracking (or, in particular, a determined gaze direction) is used to enable user interaction (e.g., the user 25 selects an option on the display 1010 by looking at it), provide foveated rendering (e.g., present a higher resolution in an area of the display 1010 the user 25 is looking at and a lower resolution elsewhere on the display 1010), or correct distortions (e.g., for images to be provided on the display 1010). In various implementations, the one or more light sources 1022 emit light towards the eye 35 of the user 25 which reflects in the form of a plurality of glints.

In various implementations, the camera 1024 is a frame/shutter-based camera that, at a particular point in time or multiple points in time at a frame rate, generates an image of the eye 35 of the user 25. Each image includes a matrix of pixel values corresponding to pixels of the image which correspond to locations of a matrix of light sensors of the camera. In implementations, each image is used to measure or track pupil dilation by measuring a change of the pixel intensities associated with one or both of a user's pupils.

In various implementations, the camera 1024 is an event camera including a plurality of light sensors (e.g., a matrix of light sensors) at a plurality of respective locations that, in response to a particular light sensor detecting a change in intensity of light, generates an event message indicating a particular location of the particular light sensor.

In various implementations, the camera 1032 camera 1034, and camera 1036 are frame/shutter-based cameras that, at a particular point in time or multiple points in time at a frame rate, can generate an image of the face of the user 25. For example, camera 1032 captures images of the user's face below the eyes, and camera 1034 captures images of the user's face above the eyes, and camera 1036 captures the external environment of the user (e.g., environment 100 of FIG. 1). The images captured by camera 1032, camera 1034, and camera 1036, may include light intensity images (e.g., RGB) and/or depth image data (e.g., Time-of-Flight, infrared, etc.).

It will be appreciated that the implementations described above are cited by way of example, and that the present invention is not limited to what has been particularly shown and described hereinabove. Rather, the scope includes both combinations and sub combinations of the various features described hereinabove, as well as variations and modifications thereof which would occur to persons skilled in the art upon reading the foregoing description and which are not disclosed in the prior art.

Some embodiments described herein can include use of learning and/or non-learning-based process(es). The use can include collecting, pre-processing, encoding, labeling, organizing, analyzing, recommending and/or generating data. Entities that collect, share, and/or otherwise utilize user data should provide transparency and/or obtain user consent when collecting such data. The present disclosure recognizes that the use of the data in the CoDy task list processes can be used to benefit users. For example, the data can be used to train models that can be deployed to improve performance, accuracy, and/or functionality of applications and/or services. Accordingly, the use of the data enables the CoDy task list processes to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the CoDy task list processes are also contemplated by the present disclosure.

The present disclosure contemplates that, in some embodiments, data used by CoDy task list processes includes publicly available data. To protect user privacy, data may be anonymized, aggregated, and/or otherwise processed to remove or to the degree possible limit any individual identification. As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with CoDy task list processes, should attempt to comply with well-established privacy policies and/or privacy practices.

For example, such entities may implement and consistently follow policies and practices recognized as meeting or exceeding industry standards and regulatory requirements for developing and/or training CoDy task list processes. In doing so, attempts should be made to ensure all intellectual property rights and privacy considerations are maintained. Training should include practices safeguarding training data, such as personal information, through sufficient protections against misuse or exploitation. Such policies and practices should cover all stages of the CoDy task list processes development, training, and use, including data collection, data preparation, model training, model evaluation, model deployment, and ongoing monitoring and maintenance. Transparency and accountability should be maintained throughout. Such policies should be easily accessible by users and should be updated as the collection and/or use of data changes. User data should be collected for legitimate and reasonable uses of the entity and not shared or sold outside of those legitimate uses. Further, such collection and sharing should occur through transparency with users and/or after receiving the informed consent of the users. Additionally, such entities should consider taking any needed steps for safeguarding and securing access to such data and ensuring that others with access to the data adhere to their privacy policies and procedures. Further, such entities should subject themselves to evaluation by third parties to certify, as appropriate for transparency purposes, their adherence to widely accepted privacy policies and practices. In addition, policies and/or practices should be adapted to the particular type of data being collected and/or accessed and tailored to a specific use case and applicable laws and standards, including jurisdiction-specific considerations.

In some embodiments, CoDy task list processes may utilize models that may be trained (e.g., supervised learning or unsupervised learning) using various training data, including data collected using a user device. Such use of user-collected data may be limited to operations on the user device. For example, the training of the model can be done locally on the user device so no part of the data is sent to another device. In other implementations, the training of the model can be performed using one or more other devices (e.g., server(s)) in addition to the user device but done in a privacy preserving manner, e.g., via multi-party computation as may be done cryptographically by secret sharing data or other means so that the user data is not leaked to the other devices.

In some embodiments, the trained model can be centrally stored on the user device or stored on multiple devices, e.g., as in federated learning. Such decentralized storage can similarly be done in a privacy preserving manner, e.g., via cryptographic operations where each piece of data is broken into shards such that no device alone (i.e., only collectively with another device(s)) or only the user device can reassemble or use the data. In this manner, a pattern of behavior of the user or the device may not be leaked, while taking advantage of increased computational resources of the other devices to train and execute the ML model. Accordingly, user-collected data can be protected. In some implementations, data from multiple devices can be combined in a privacy-preserving manner to train an ML model.

In some embodiments, the present disclosure contemplates that data used for CoDy task list processes may be kept strictly separated from platforms where the CoDy task list processes are deployed and/or used to interact with users and/or process data. In such embodiments, data used for offline training of the CoDy task list processes may be maintained in secured datastores with restricted access and/or not be retained beyond the duration necessary for training purposes. In some embodiments, the CoDy task list processes may utilize a local memory cache to store data temporarily during a user session. The local memory cache may be used to improve performance of the CoDy task list processes. However, to protect user privacy, data stored in the local memory cache may be erased after the user session is completed. Any temporary caches of data used for online learning or inference may be promptly erased after processing. All data collection, transfer, and/or storage should use industry-standard encryption and/or secure communication.

In some embodiments, as noted above, techniques such as federated learning, differential privacy, secure hardware components, homomorphic encryption, and/or multi-party computation among other techniques may be utilized to further protect personal information data during training and/or use of the CoDy task list processes. The CoDy task list processes should be monitored for changes in underlying data distribution such as concept drift or data skew that can degrade performance of the CoDy task list processes over time.

In some embodiments, the CoDy task list processes are trained using a combination of offline and online training. Offline training can use curated datasets to establish baseline model performance, while online training can allow the CoDy task list processes to continually adapt and/or improve. The present disclosure recognizes the importance of maintaining strict data governance practices throughout this process to ensure user privacy is protected.

In some embodiments, the CoDy task list processes may be designed with safeguards to maintain adherence to originally intended purposes, even as the CoDy task list processes adapt based on new data. Any significant changes in data collection and/or applications of CoDy task list process use may (and in some cases should) be transparently communicated to affected stakeholders and/or include obtaining user consent with respect to changes in how user data is collected and/or utilized.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the CoDy task list processes and/or for use as input during the inference stage of such systems. In yet another example, the present technology should be configured to allow users to be able to select to limit the length of time data is maintained or entirely prohibit the use of their data for use by the CoDy task list processes. In addition to providing "opt in" and "opt out" options, the present disclosure contemplates providing notifications relating to the access or use of personal information. For instance, a user can be notified when their data is being input into the CoDy task list processes for training or inference purposes, and/or reminded when the CoDy task list processes generate outputs or make decisions based on their data.

The present disclosure recognizes CoDy task list processes should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to or failures to cite third-party products and/or services in the outputs should not be construed as endorsements or affiliations by the entities providing the CoDy task list processes. Generated content can be filtered for potentially inappropriate or dangerous material prior to being presented to users, while human oversight and/or ability to override or correct erroneous or undesirable outputs can be maintained as a failsafe.

The present disclosure further contemplates that users of the CoDy task list processes should refrain from using the services in any manner that infringes upon, misappropriates, or violates the rights of any party. Furthermore, the CoDy task list processes should not be used for any unlawful or illegal activity, nor to develop any application or use case that would commit or facilitate the commission of a crime, or other tortious, unlawful, or illegal act including misinformation, disinformation, misrepresentations (e.g., deepfakes), deception, impersonation, and propaganda. The CoDy task list processes should not violate, misappropriate, or infringe any copyrights, trademarks, rights of privacy and publicity, trade secrets, patents, or other proprietary or legal rights of any party, and appropriately attribute content as required. Further, the CoDy task list processes should not interfere with any security, digital signing, digital rights management, content protection, verification, or authentication mechanisms. The CoDy task list processes should not misrepresent machine-generated outputs as being human-generated.

As described above, one aspect of the present technology is the gathering and use of sensor data that may include user data to improve a user's experience of an electronic device. The present disclosure contemplates that in some instances, this gathered data may include personal information data that uniquely identifies a specific person or can be used to identify interests, traits, or tendencies of a specific person. Such personal information data can include movement data, physiological data, demographic data, location-based data, telephone numbers, email addresses, home addresses, device characteristics of personal devices, or any other personal information.

The present disclosure recognizes that the use of such personal information data, in the present technology, can be used to the benefit of users. For example, the personal information data can be used to improve the content viewing experience. Accordingly, use of such personal information data may enable calculated control of the electronic device. Further, other uses for personal information data that benefit the user are also contemplated by the present disclosure.

The present disclosure further contemplates that the entities responsible for the collection, analysis, disclosure, transfer, storage, or other use of such personal information and/or physiological data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates implementations in which users selectively block the use of, or access to, personal information data. That is, the present disclosure contemplates that hardware or software elements can be provided to prevent or block access to such personal information data. For example, in the case of user-tailored content delivery services, the present technology can be configured to allow users to select to "opt in" or "opt out" of participation in the collection of personal information data during registration for services. In another example, users can select not to provide personal information data for targeted content delivery services. In yet another example, users can select to not provide personal information, but permit the transfer of anonymous information for the purpose of improving the functioning of the device.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences or settings based on non-personal information data or a bare minimum amount of personal information, such as the content being requested by the device associated with a user, other non-personal information available to the content delivery services, or publicly available information.

In some embodiments, data is stored using a public/private key system that only allows the owner of the data to decrypt the stored data. In some other implementations, the data may be stored anonymously (e.g., without identifying and/or personal information about the user, such as a legal name, username, time and location data, or the like). In this way, other users, hackers, or third parties cannot determine the identity of the user associated with the stored data. In some implementations, a user may access their stored data from a user device that is different than the one used to upload the stored data. In these instances, the user may be required to provide login credentials to access their stored data.

Numerous specific details are set forth herein to provide a thorough understanding of the claimed subject matter. However, those skilled in the art will understand that the claimed subject matter may be practiced without these specific details. In other instances, methods apparatuses, or systems that would be known by one of ordinary skill have not been described in detail so as not to obscure claimed subject matter.

Unless specifically stated otherwise, it is appreciated that throughout this specification discussions utilizing the terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provides a result conditioned on one or more inputs. Suitable computing devices include multipurpose microprocessor-based computer systems accessing stored software that programs or configures the computing system from a general-purpose computing apparatus to a specialized computing apparatus implementing one or more implementations of the present subject matter. Any suitable programming, scripting, or other type of language or combinations of languages may be used to implement the teachings contained herein in software to be used in programming or configuring a computing device.

Implementations of the methods disclosed herein may be performed in the operation of such computing devices. The order of the blocks presented in the examples above can be varied for example, blocks can be re-ordered, combined, and/or broken into sub-blocks. Certain blocks or processes can be performed in parallel.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or value beyond those recited. Headings, lists, and numbering included herein are for ease of explanation only and are not meant to be limiting.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

The foregoing description and summary of the invention are to be understood as being in every respect illustrative and exemplary, but not restrictive, and the scope of the invention disclosed herein is not to be determined only from the detailed description of illustrative implementations but according to the full breadth permitted by patent laws. It is to be understood that the implementations shown and described herein are only illustrative of the principles of the present invention and that various modification may be implemented by those skilled in the art without departing from the scope and spirit of the invention.

## Claims

1. A method comprising:
at a device having a processor:
obtaining a task list associated with a user, wherein the task list comprises a plurality of tasks, each task including a user-defined action;
identifying conditions associated with performance by the user of the plurality of tasks, wherein the conditions are identified based on an automated analysis of the user-defined actions;
determining a context while a user is in a physical environment during a period of time;
identifying at least one task from the task list based on the context satisfying one or more of the conditions; and
providing a view of a notification associated with the identified at least one task.

2. The method of claim 1, wherein the task list comprises a plurality of subsets of tasks, each subset of tasks comprising a context-based hierarchy.

3. The method of claims 1 or 2, wherein the task list comprises a context-based hierarchy that is prioritized based on one or more prioritization variables.

4. The method of claim 3, wherein the one or more prioritization variables comprises:
payment history data associated with the user;
location information associated with the device in the physical environment during the period of time;
scheduling information associated with the user during the period of time;
weather information during the period of time or during a future period of time associated with completion of a particular task; and semantic information associated with completion of a particular task.

5. The method of any of claims 1-4, wherein each task comprises a user-defined prioritization level.

6. The method of any of claims 1-5, wherein a prioritization level of one or more tasks is modified based on the determined context while the user is in the physical environment during the period of time.

7. The method of any of claims 1-6, wherein identifying conditions associated with performance by the user of the plurality of tasks comprises identifying one or more requirements associated with completing the task.

8. The method of any of claims 1-7, wherein identifying conditions associated with performance by the user of the plurality of tasks comprises identifying that a first condition associated with completing a first task is the same condition associated with completing a second task.

9. The method of any of claims 1-8, wherein identifying the at least one task from the task list based on the context satisfying one or more of the conditions comprises identifying one or more tasks that satisfy a particular condition based on the physical environment and the period of time.

10. The method of any of claims 1-9, further comprising:
determining that a first task from the task list is completed; and
updating the task list based on the completed task.

11. The method of any of claims 1-10, wherein determining the context while the user is in the physical environment during the period of time is based on at least one of sensor data of the physical environment and physiological sensor data of the user.

12. The method of any of claims 1-11, wherein determining the context while the user is in the physical environment during the period of time is based on accessing data from an application associated with the user.

13. The method of any of claims 1-12, wherein a location of the view of the notification is based on the determined context while the user is in the physical environment during the period of time.

14. A device comprising:
a non-transitory computer-readable storage medium; and
one or more processors coupled to the non-transitory computer-readable storage medium, wherein the non-transitory computer-readable storage medium comprises program instructions that, when executed on the one or more processors, cause the one or more processors to perform operations comprising any of the methods of claims 1-13.

15. A non-transitory computer-readable storage medium, storing program instructions executable on a device to perform operations comprising any of the methods of claims 1-13.
